# EUROPEAN PATENT SPECIFICATION

(11) **EP 1 816 933 B1**
(45) Date of publication and mention of the grant of the patent: **30.07.2008**
(21) Application number: 04791927.9
(22) Date of filing: 28.10.2004
(51) Int. Cl.: A47J 31/30

(54) **EQUIPMENT FOR THE PRODUCTION OF A HOT BEVERAGE**
AUSRÜSTUNG FÜR DIE ZUBEREITUNG EINES HEISSGETRÄNKS
DISPOSITIF DE PRODUCTION DE BOISSONS CHAUDES

(43) Date of publication of application: 15.08.2007
(60) Divisional application: 08156507.9
(73) Proprietor: BIALETTI INDUSTRIE S.P.A., 25030 Coccaglio (Brescia) (IT)
(72) Inventor: RANZONI, Francesco, I-25030 Coccaglio (Brescia) (IT)
(74) Representative: Leihkauf, Steffen Falk
(86) International application number: PCT/IT2004/000593
(87) International publication number: WO 2006/046260

(56) References cited:
- EP-A- 0 838 186
- EP-A- 1 208 781
- CH-A- 252 508
- US-A- 2 936 696
- US-A- 5 970 850

## Description

. The object of the present invention is an equipment for the production of a hot beverage, particularly coffee, cappuccino and the like, as well as a container suitable to be housed in such equipment.

. Particularly, the present invention relates to the field of equipment called moka and suitable to conventionally produce coffee or other types of hot beverages. With reference to the production of coffee, by moka is meant an equipment operating by heating an amount of water provided inside the boiler and delivering it under pressure in a collection container through a layer of powdered coffee.

. In other words, when the temperature increases, the pressure inside the boiler will increase until reaching a value at which the water contained therein will rise up to the upper container, passing through a layer of powdered coffee and extracting the aroma therefrom.

. Some known equipment is provided with a valve applied to the end of the delivery pipe of the collection container. A plug inside the valve closes the delivery pipe until a certain pressure is reached inside the boiler, which is greater than the delivery pressure when the valve is not provided. Some valves further provide means for immobilizing the plug in the open (raised) position to allow the delivery both of liquid and steam preferably through a conduit ending below the groundwater surface of the beverage, in order to obtain foamed beverages, for example cappuccino.

**.** The known equipment have some drawbacks that are mainly associated to the fact that the efficiency of the transformation of the energy accumulated in the boiler to the cinetic energy of the fluid rising up from the boiler to the collection container has never been deemed particularly important.

**.** In other words, the effect exerted by the kinetic energy value of the fluid being delivered on the organoleptic characteristics of the obtained beverage has never been taken into account. Some known devices are known from US-A-2936696, US-A-5970850, EP-A-1208781, EP-A-838186, US-A-2936696 discloses a device for the preparation of infusions having a basket with a movable bottom. US-A-5970850 discloses a device used for making hot beverages having a piston-cylinder assembly for holding grounds. EP-A-1208781 discloses a pressure coffee maker for preparing infusion in which the path between the boiler and the collecting vessel is closed off and is opened up once a predetermined overpressure with respect to atmospheric pressure is attained in the boiler. EP-A-838186 discloses a percolator of mocha type for espresso coffee in which a receiver comprises a support element movable in a vertical direction and arranged to support a bag of ground substance.

- The Applicant has surprisingly found that a high kinetic energy of the fluid positively affects the organoleptic characteristics of the beverage. This effect is even more enhanced with those equipment provided with valves, such as described above, particularly in case of the production of cappuccino, because the turbulence generated in the milk is increased and consequently the foam obtained is more creamy, more uniform and more persistent.

**.** The problem at the heart of the present invention is that of having found a factor affecting the organoleptic characteristics of the beverage in the kinetic energy of the liquid being delivered and that of providing an equipment for the production of hot beverages having such structural and functional characteristics as to overcome the above drawbacks cited with reference to the prior art.

. Particularly, the problem at the- heart of the present invention is to provide an equipment for the production of hot beverages allowing to obtain a high kinetic energy of the liquid being delivered.

. This problem is resolved by means of an equipment for the production of hot beverages in accordance with claim 1. The dependent claims 2-23 relate to further embodiments of the equipment according to the present invention. Independent claim 24 and subsequent dependent claims 25-35 are directed to a container suitable to be housed in the equipment of the present invention.

. Further characteristics and the advantages of the equipment according to the invention will be understood from the description below of preferred embodiments thereof, which are intended as being merely illustrative and non-limiting, with reference to the annexed drawings, in which:

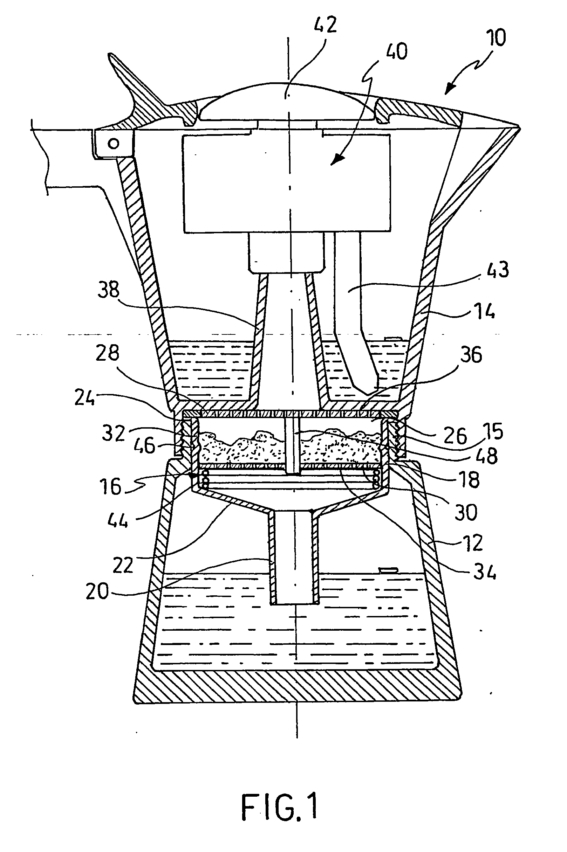

. Figure 1 illustrates a longitudinal sectional view of an equipment for the production of a hot beverage in accordance with the present invention;

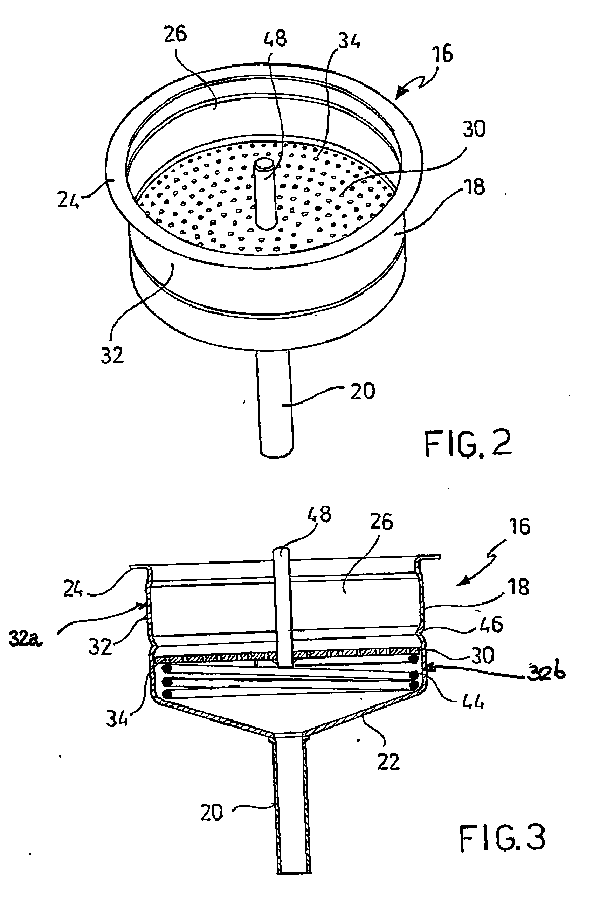

. Figure 2 illustrates a perspective view of a detail of the equipment from figure 1;

. Figure 3 illustrates a longitudinal sectional view of the detail from figure 2;

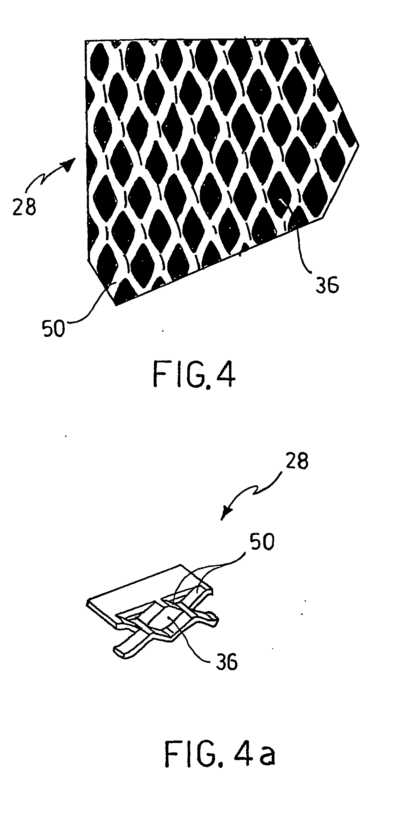

. Figure 4 illustrates an enlarged and negative view of a detail of the equipment from figure 1;

. Figure 4a illustrates an enlarged perspective view of a detail from figure 4.

. With reference to the above figures, with 10 has been generally designated an equipment for the production of a hot beverage. This equipment is generally known as a moka and is suitable to make various types of beverages, among which coffee and cappuccino.

. The equipment 10 comprises a boiler 12 and a collection container 14 being associated to the boiler. Conventionally, the collection container is screwed onto an open mouth 15 of boiler.

. The equipment 10 further comprises a container 16 for a powder or ground ingredient, for example coffee, being inserted in the boiler open mouth.

. The container 16 comprises a bowl 18 projecting below a blowpipe 20 for example joined to the bowl through a flared portion 22.

. In accordance with an embodiment, the container 16 further comprises an edge 24 suitable to be rested on the upper edge of the open mouth of boiler 12.

. In the assembled position of the equipment 10, the container 16 is inserted in the boiler such that the blowpipe 20 extends within the boiler. Furthermore, the collection container 14 is screwed to the boiler 12 above the container 16, such as for example illustrated in figure 1.

. With 26 there has been indicated a housing chamber for the powder or ground ingredient. This housing chamber is defined by container 16 that is inserted within the boiler open mouth, and a bottom 28 of the collection container 14.

. Particularly, the housing chamber 26 is defined by the bottom 28 of the collection container 14, by a bottom 30 of the bowl 18 and side walls 32 of the container 16 for the powdered or ground ingredient.

. In accordance with a possible embodiment, the bottom 30 of the bowl consists of a disk provided with a plurality of small holes 34.

. In accordance with a possible embodiment, the bottom 28 of the collection container is defined by a disk provided with a plurality of openings 36.

. In accordance with a possible embodiment, the container 16 for the powdered or ground ingredient, the housing chamber 26 and a delivery pipe 38 leading to the collection container 14 define means for defining a connection path from the boiler to the collection container. When the boiler is heated, a liquid being contained therein, generally water, rises up through said path to the collection container, passing through the powdered or ground ingredient and extracting the flavour therefrom.

. In accordance with a possible embodiment, the equipment 10 comprises a valve 40 being housed at the end of the delivery pipe 38. The valve 40 comprises a plug, not illustrated, suitable to close the delivery pipe 38 until reaching a certain pressure value within the boiler. In figure 1 there can be seen a plunger-shaped end 42 being connected to the plug and extending outside the valve body. This plunger-shaped end is also preferably a calibrated weight of the plug.

**.** When a certain pressure value is reached within the boiler, the plug will be raised and the liquid being contained in the boiler can quickly rise up to the collection container. Preferably, the plug moves along a vertical direction, within the valve body, between a closed (lowered) position and an open (raised) position.

. Preferably, the valve 40 comprises means, not illustrated, immobilizing the plug in the open position of the delivery pipe. Furthermore, the valve 40 can comprise at least one outlet conduit 43 leading to the collection container at a lower level than the outlet of the delivery pipe 38.

**.** Advantageously, the means defining a connection path from the boiler to the collection container comprise means for limiting the pressure drop experienced by the liquid contained in the boiler which, when the boiler is heated, rises up through the connecting path to the collection container.

. In accordance with a possible embodiment, the means for limiting pressure drop comprise means for increasing the volume of the housing chamber 26 between a volume at rest, corresponding to a non-assembled configuration of the equipment, and a working volume corresponding to the assembled configuration of the equipment.

. With reference to what has been described above, by assembled configuration of the equipment is meant the configuration in which the collection container 14 is screwed to the boiler 12 containing the container 16 for the powdered or ground ingredient (figure 1). On the other hand, by non-assembled configuration is meant the configuration in which the collection container is not screwed to the boiler. Preferably, reference is made to a non-assembled configuration in which the container 16 for the powdered or ground ingredient is either inserted in the boiler or free, such as illustrated in figures 2 and 3.

. In accordance with a possible embodiment, the working volume of the housing chamber 26 is about 15% greater than its volume at rest.

. In accordance with a possible embodiment, the bottom 30 of-container 16 for the powdered or ground ingredient moves along the side walls 32 of the container between a rest position, corresponding to a non-assembled configuration of the equipment, and a working position, corresponding to an assembled configuration of the equipment.

. In normal usage of equipment 10, i.e. the equipment being placed on a horizontal plane, the bottom 30 moves along a vertical direction. Particularly, the bottom 30 moves between the rest position, in which the bottom is arranged at a certain height, and the working position, in which the bottom is arranged at a lower height than the rest position.

. In accordance with a possible embodiment, the container 16 for the powdered or ground ingredient comprises means for holding the bottom 30 in the rest position. Advantageously, these means comprise elastic means that are inserted between the bottom and bottom walls of the container, for example the flared portion 22. Preferably, the elastic means comrpise a helicoidal spring 44 internally and laterally placed at the side walls of container 16 for the powdered or ground ingredient.

. In accordance with a possible embodiment, the container 16 for the powdered or ground ingredient comprises means for defining the rest position of the bottom 30 thereof. Advantageously, these means comprise at least a projection from the side walls 32 extending inwards to the housing chamber 26. Preferably the projection is obtained by locally folding the side walls of the container 16 for the powdered or ground ingredient. In accordance with a possible embodiment, such as illustrated in the figures, the projection is an annular folding 46 of the side walls 32 of the housing chamber 26.

. In accordance with a possible embodiment, the equipment 10 comprises means for displacing the bottom 30 of container 16 from the rest position to the working position in the assembled configuration of the equipment. Advantageously, these means comprise at least one rigid element 48 being interposed between the moving bottom 30 of the container for the powdered or ground ingredient and the bottom 28 of the collection container 14. This rigid element has a length equal to the distance between the moving bottom 30, in the working position, and the bottom 28 of the collection container. This length is greater than the distance between the moving bottom 30, in the rest position, and the bottom 28 of the collection container.

. Preferably, the rigid element 48 is made as one piece with the moving bottom 30 and extends to the bottom 28 of the collection container 14. Still more preferably, the rigid element 48 extends centrally to the moving center 30.

. In accordance with a possible embodiment, in the rest position of the moving bottom 30 (figure 2 and 3) the rigid element 48 extends beyond the height of the side walls 32 of the container 16 to interfere with the bottom 28 of the collection container and push the moving bottom 30 downwards, at the assembled configuration of the equipment (figure 1).

. With particular reference to figure 3, the container 16 comprises side walls 32 having a greater height than the side walls of a container according to the prior art that is suitable for producing the same amount of beverage. In fact, a first portion 32a of the side walls 32 defines the volume of powdered or ground ingredient (for example coffee) suitable to the particular type of equipment, whereas a second portion 32b of the walls 32 defines the housing area of spring 44 and the movement area of the moving bottom 30.

. In accordance with the embodiment illustrated in the figures, the moving bottom 30 slides along the side walls 32 defining a guide and a containment element of the bottom.

. In accordance with a possible-embodiment, the means for limiting the pressure drop comprise the bottom 28 of the collection container 14, wherein a plurality of openings 36 is provided in said bottom for the liquid to pass therethrough from the boiler to the collection container. These openings are configured and arranged such that the void/full ratio of bottom 28 is greter than 5%, preferably equal to 25%.

. In accordance with a possible embodiment, at least one of openings 36 is defined by a folded length 50 of the bottom 28 of the collection container, to increase the passage surface for the liquid contained in the boiler. In other words, the opening 36 has a passage section substantially transversal to the plane pathway of bottom 28.

. The operation of the equipment will be described below with reference to the same as being arranged for the production of cappuccino.

. The boiler 12 is filled with a certain amount of water and the container 16 is inserted within the open mouth of the boiler. A certain amount of coffee is prepared in the container 16, for example by filling the volume available with the bottom 30 being in the rest -position. Subsequently, the collection container 14 is screwed to the boiler and at the same time the rigid element 48 interferes with the bottom 28 of the collection container by pushing the bottom 30 of the container 16 downwards (figure 1). A certain amount of milk is introduced in the collection container and the valve 40 is applied to the delivery pipe 38. The plug of valve 40 is set in the lowered (i.e. closed) position of the delivery pipe (figure 1). Subsequently, the boiler is conventionally heated until the pressure in the boiler exceeds a certain value corresponding to the pressure value at which the plug is raised. The latter is immobilised in the raised position such that both the water and the steam contained in the boiler are quickly released into the milk thereby generating a turbulence contributing to form the foam.

. Generally, the operation of an equipment of the type described above provides that, by heating the liquid contained in the boiler, the pressure and temperature values therein will until the accumulated energy turns into kinetic energy of the liquid flowing along the delivery path. Contrarily to what has been believed so far, it has been noted that a greater kinetic energy of the liquid corresponds to a beverage with improved organoleptic characteristics, particularly in the case where the beverage, is cappuccino, as will be described below.

. The present invention allows to improve the efficiency of the transformation of the energy accumulated within the boiler, prior to delivery, to kinetic energy during the delivery, thereby improving the organoleptic properties of the beverage, the conditions reached within the boiler being equal.

. The present equipment, particularly when provided with valve 40, can be used for the production of coffee, with or without foam, or cappuccino.

. In the case where the valve 40 being equipped with means for immobilizing the plug in the open position is provided, selecting the position of the plug allows to select the type of beverage as desired. By arranging the plug in the lowered position in which it closes the outlet of the delivery pipe 38, the delivery of the liquid contained in the boiler takes place when the pressure inside the boiler has reached a threshold value capable of counteracting the plug and raise it to open the delivery pipe.

. In other words, the presence of the plug allows to store more energy inside the boiler and then to obtain more kinetic energy of the liquid being delivered. It has been surprisingly found that the efficiency of this transformation is even more important when the equipment is used for the production of cappuccino, using a valve 40 provided with means for immobilizing the plug in the raised (open) position of a conduit leading below the groundwater surface of the beverage contained in the collection container (figure 1).

. The more the energy accumulated in the boiler is effectively transformed in kinetic energy of the liquid/vapour contained in the boiler, the more the turbolence that may be generated in the milk is high, and so are the amount, persistence and consistency of the foam obtained.

**.** Particularly, due to the present invention, the liquid flowing through the connection path between the boiler and the collection container is subjected to limited pressure drop, therefore the energy accumulated in the boiler before the plug opens is effectively turned to kinetic energy.

. The liquid being delivered is subjected to a first pressure drop while flowing through the layer of powdered or ground ingredient (coffee). This is due both to the nature of this layer and the effect of the liquid. The pressure drop increases with the compactness level of the powdered ingredient that, besides depending on the characteristics of the powder and the pressure applied by the operator, increases when the powder is wet by the liquid rising up along the blowpipe 20 because the wet powdered layer expands.

. Due to the original provision of a housing chamber of a varying volume, the volume at rest, i.e. that being filled by the operator, is smaller than the working volume thereby leaving about 15% expansion volume for the powdered layer imbibed with liquid.

. However, this allows to provide a volume at rest corresponding to the volume of ingredient required for the volumetry of the equipment, such that the user is provided with a precise reference.

. Furthermore, the original provision of a bottom of the container having a high void/full ratio allows to further limit the pressure drop experienced by the liquid being delivered. The advantageous configuration of the openings 36 allows to considerably increase the void/full ratio.

. It is understood that variants and/or additions to what has been described and illustrated above can be provided.

. Alternatively to what has been illustrated in the drawings, the moving bottom can be that of the collection container or both.

. Furthermore, the rigid element can be fixed to the bottom of the collection container in all the possible embodiments thereof.

. The valve, if provided, can have various configurations, both of the valve body and the plug, as well as the means for immobilising the same, if provided.

. The helicoidal spring 44 can be replaced with any means suitable to hold the bottom 30 in the rest position. For example, other types of elastic means or other arrangements of the same are possible.

. To the preferred embodiment of the equipment described above, those skilled in the art, aiming at satisfying contingent and specific requirements, will be able to carry out a number of modifications without however departing from the scope of the claims.

## Claims

1. Equipment (10) for the production of a hot beverage comprising a boiler (12), a collection container (14) being associated to the boiler (12) and means defining a connection path from the boiler (12) to the collection container (14),
wherein said means defining a collection path from the boiler (12) to the collection container (14) comprise means for limiting the pressure drop experienced by a liquid contained in the boiler (12) that, when the boiler is heated, rises up along said path to the collection container (14), wherein it further comprises a housing chamber (26) for a powdered or ground ingredient, said housing chamber (26) being defined by a container (16) for said powdered or ground ingredient, which is inserted within the open mouth (15) of the boiler (12), and a bottom (28) of said collection container (14), **characterized in that** said means for limiting the pressure drop comprise means for increasing the volume of the housing chamber (26) between a volume at rest, corresponding to a non-assembled configuration of the equipment, and a working volume corresponding to an assembled configuration of the equipment.

2. The equipment according to claim 1, wherein the working volume of said housing chamber (26) is about 15% greater than the volume at rest of said housing chamber (26).

3. The equipment according to claim 1 or 2, wherein said container (16) for said powdered or ground ingredient comprises a bottom (30) moving along side walls (32) of the container (16) between a rest position, corresponding to a non-assembled configuration of the equipment, and a working position, corresponding to an assembled configuration of the equipment.

4. The equipment according to claim 3, wherein said bottom (30) moves along a vertical direction.

5. The equipment according to claim 4, wherein said bottom (30) moves between said rest position, wherein said bottom (30) is arranged at a certain height, and said working position, wherein said bottom (30) is arranged at a lower height than the rest position.

6. The equipment according to one of claims 4 to 6, wherein said container (16) for said powdered or ground ingredient comprises means for holding said bottom (30) in the rest position.

7. The equipment according to claim 6, wherein said means for holding said bottom (30) in the rest position comprise elastic means being inserted between said bottom (30) and bottom walls of said container (16).

8. The equipment according to claim 7, wherein said elastic means comprise a helicoidal spring (44) placed internally on the side of the side walls (32) of the container (16) for said powdered or ground ingredient.

9. The equipment according to one of claims 3 to 8, wherein said container (16) for said powdered or ground ingredient comprises means for defining said rest position of said bottom (30).

10. The equipment according to claim 9, wherein said means for defining said rest position comprise at least one projection of said side walls (32) extending towards the inside of said housing chamber (26) of the powdered or ground ingredient.

11. The equipment according to claim 10, wherein said projection is obtained by locally folding the side walls (32) of the container (16) for said powdered or ground ingredient.

12. The equipment according to claim 10 or 11, wherein said projection is an annular folding (46) of the side walls (32) of the housing chamber (26).

13. The equipment according to one of claims 3 to 12, further comprising means for displacing said bottom (30) of container (16) for the powdered or ground ingredient from the rest position to the working position at the assembled configuration of the equipment.

14. The equipment according to claim 13, wherein said means for displacing said bottom (30) comprise at least one rigid element (48) being interposed between the moving bottom (30) of the container (16) for said powdered or ground ingredient and the bottom (28) of the collection container (14), said rigid element (48) having a length equal to the distance between the moving bottom (30), in the working position, and the bottom (28) of the collection container (14), said length being greater than the distance between said moving bottom (30), in the rest position and said bottom (28) of the collection container (14).

15. The equipment according to claim 14, wherein said rigid element (48) is made as one piece with the moving bottom (30) and extends towards the bottom (28) of the collection container (14).

16. The equipment according to claim 15, wherein said rigid element (48) extends centrally to the moving bottom

17. The equipment according to claim 15 or 16, wherein said rigid element (48) extends from the moving bottom (30) by a greater height of the side walls (32) of container (16).

18. The equipment according to one of claims 3 to 17, wherein said moving bottom (30) comprises a plurality of small holes (34) for the liquid to pass from the boiler (12) to the collection container (14).

19. The equipment according to one of preceding claims, wherein said container (16) for said powdered or ground ingredient at least partially defines said connection path.

20. The equipment according to one of preceding claims, wherein said means for limiting the pressure drop further comprise a bottom (28) of said collection container (14) being provided by a plurality of openings (36) for said liquid to pass therethrough that are arranged and configured such that the void/full ratio is greater than 5%.

21. The equipment according to claim 20, wherein the openings (36) of said bottom (28) of the collection container (14) are arranged and configured such that the void/full ratio is equal to about 25%.

22. The equipment according to claim 20 or 21, wherein at least one of said openings (36) is defined by a folded length of said bottom (28) in order to increase the passage surface for said liquid.

23. The equipment according to one of preceding claims, further comprising a valve (40) being housed at the end of a delivery pipe (38) of said collection container (14), said valve (40) comprising a plug suitable to close said delivery pipe (38) until a certain pressure has been reached within the boiler (12).

24. A container (16) for a powdered or ground ingredient suitable to be housed in an equipment (10) for the production of a hot beverage according to one of preceding claims, comprising a moving bottom (30) along side walls (32) of the container (16) between a rest position, corresponding to a non-assembled configuration of the equipment, and a working position, corresponding to an assembled configuration of the equipment, **characterized in that** it further comprises means for displacing said bottom (30) from the rest position to the working position in the assembled configuration of the equipment.

25. The container according to claim 24, comprising means for holding said bottom (30) in the rest position.

26. The container according to claim 25, wherein said means for holding said bottom (30) in the rest position comprise elastic means being inserted between said bottom (30) and bottom walls of said container (16).

27. The container according to claim 26, wherein said elastic means comprise a helicoidal spring (44) placed internally on the side of side walls (32) of the container (16) for said powdered or ground ingredient.

28. The container according to one of claims 24 to 27, comprising means for defining said rest position of said bottom (30).

29. The container according to claim 28, wherein said means for defining said rest position comprise at least one projection of said side walls (32) extending towards the inside of said housing chamber (26) of the powdered or ground ingredient.

30. The container according to claim 29, wherein said projection is obtained by locally folding the side walls (32) of the container (16) for said powdered or ground ingredient.

31. The container according to claim 29 or 30, wherein said projection is an annular folding (46) of the side walls (32) of the housing chamber (26).

32. The container according to claim 24, wherein said means for displacing said bottom (30) comprise at least one rigid element (48) having a length equal to the distance between the moving bottom (30), in the working position, and the bottom (28) of the collection container (14), said length being greater than the distance between said moving bottom (30), in the rest position, and said bottom (28) of the collection container (14).

33. The container according to claim 32, wherein said rigid element (48) is made as one piece with the moving bottom (30) and extends towards the bottom (28) of the collection container (14).

34. The container according to claim 33, wherein said rigid element (48) extends centrally to the moving bottom (30).

35. The container according to claim 33 or 34, wherein said rigid element (48) extends from the moving bottom (30) for a greater height of the side walls (32) of the container (16).

## Patentansprüche

1. Ausrüstung (10) zur Herstellung eines Heißgetränks, umfassend einen Boiler (12), einen Auffangbehälter (14), der mit dem Boiler (12) verbunden ist, und Mittel, die einen Verbindungsweg von dem Boiler (12) zu dem Auffangbehälter (14) bestimmen,
wobei die Mittel, die einen Verbindungsweg von dem Boiler (12) zu dem Auffangbehälter (14) begrenzen, Mittel zur Beschränkung des Druckabfalls umfassen, den eine in dem Boiler (12) enthaltene Flüssigkeit erfährt, die, wenn der Boiler erhitzt wird, entlang dem Weg zu dem Auffangbehälter (14) ansteigt,
wobei ferner eine Aufnahmekammer (26) für eine pulvrige oder gemahlene Zutat umfasst ist, wobei die Aufnahmekammer (26) von einem Behälter (16) für die pulvrige oder gemahlene Zutat begrenzt wird, welcher in den offenen Eingang (15) des Boilers (12) eingesetzt wird, und ein Boden (28) des Auffangbehälters (14),
**dadurch gekennzeichnet, dass** die Mittel zur Beschränkung des Druckabfalls Mittel umfassen, um das Volumen der Aufnahmekammer (26) zwischen einem Ruhevolumen, was einer nicht zusammengebauten Anordnung der Ausrüstung entspricht, und einem Arbeitsvolumen, was einer zusammengebauten Anordnung der Ausrüstung entspricht, zu vergrößern.

2. Ausrüstung nach Anspruch 1, wobei das Arbeitsvolumen der Aufnahmekammer (26) um etwa 15 % größer ist als das Ruhevolumen der Aufnahmekammer (26).

3. Ausrüstung nach Anspruch 1 oder 2, wobei der Behälter (16) für die pulvrige oder gemahlene Zutat einen Boden (30) umfasst, der sich entlang der Seitenwände (32) des Behälters (16) zwischen einer Ruhestellung, die einer nicht zusammengebauten Anordnung der Ausrüstung entspricht, und einer Arbeitsstellung, die einer zusammengebauten Anordnung der Ausrüstung entspricht, bewegt.

4. Ausrüstung nach Anspruch 3, wobei sich der Boden (30) entlang einer vertikalen Richtung bewegt.

5. Ausrüstung nach Anspruch 4, wobei sich der Boden (30) zwischen der Ruhestellung, in der der Boden (30) in einer bestimmten Höhe angeordnet ist, und der Arbeitsstellung bewegt, in der der Boden (30) in einer niedrigeren Höhe als in der Ruheposition angeordnet ist.

6. Ausrüstung nach einem der Ansprüche 4 bis 5, wobei der Behälter (16) für die pulvrige oder gemahlene Zutat Mittel zu Halten des Bodens (30) in der Ruhestellung umfasst.

7. Ausrüstung nach Anspruch 6, wobei die Mittel zum Halten des Bodens (30) in der Ruhestellung elastische Mittel umfassen, die zwischen den Boden (30) und die Bodenwände des Behälters (16) eingelegt werden.

8. Ausrüstung nach Anspruch 7, wobei die elastischen Mittel eine Schraubenfeder (44) umfassen, die im Inneren auf der Seite der Seitenwände (32) des Behälters (16) für die pulvrige oder gemahlene Zutat angeordnet ist.

9. Ausrüstung nach einem der Ansprüche 3 bis 8, wobei der Behälter (16) für die pulvrige oder gemahlene Zutat Mittel zum Festlegen der Ruhestellung des Bodens (30) umfasst.

10. Ausrüstung nach Anspruch 9, wobei die Mittel zum Festlegen der Ruhestellung zumindest einen Vorsprung der Seitenwände (32) umfassen, die sich in das Innere der Aufnahmekammer (26) für die pulvrige oder gemahlene Zutat erstreckt.

11. Ausrüstung nach Anspruch 10, wobei der Vorsprung erhalten wird, indem dezentral die Seitenwände (32) des Behälters (16) für die pulvrige oder gemahlene Zutat abgekantet werden.

12. Ausrüstung nach Anspruch 10 oder 11, wobei der Vorsprung eine ringförmige Abkantung (46) der Seitenwände (32) der Aufnahmekammer (26) ist.

13. Ausrüstung nach einem der Ansprüche 3 bis 12, ferner umfassend Mittel zum Verschieben des Bodens (30) des Behälters (16) für die pulvrige oder gemahlene Zutat aus der Ruhestellung in die Arbeitsstellung in der zusammengebauten Anordnung der Ausrüstung.

14. Ausrüstung nach Anspruch 13, wobei die Mittel zum Verschieben des Bodens (30) zumindest ein starres Element (48) umfassen, welches durch den sich bewegenden Boden (30) des Behälters (16) für die pulvrige oder gemahlene Zutat und den Boden (28) des Auffangbehälters (14) eingefügt ist, wobei das starre Element (48) eine Länge aufweist, die dem Abstand zwischen dem sich bewegenden Boden (30) in der Arbeitsstellung und dem Boden (28) des Auffangbehälters (14) entspricht, wobei die Länge größer ist als der Abstand zwischen dem sich bewegenden Boden (30) in der Ruhestellung und dem Boden (28) des Auffangbehälters (14).

15. Ausrüstung nach Anspruch 14, wobei das starre Element (48) einstückig mit dem sich bewegenden Boden (30) gefertigt ist und sich zu dem Boden (28) des Auffangbehälters (14) hin erstreckt.

16. Ausrüstung nach Anspruch 15, wobei sich das starre Element (48) zentral zu dem sich bewegenden Boden (30) erstreckt.

17. Ausrüstung nach Anspruch 15 oder 16, wobei sich das starre Element (48) von dem sich bewegenden Boden (30) durch eine größere Höhe der Seitenwände (32) des Behälters (16) erstreckt.

18. Ausrüstung nach einem der Ansprüche 3 bis 17, wobei der sich bewegende Boden (30) eine Vielzahl kleiner Löcher umfasst, um die Flüssigkeit aus dem Boiler (12) in den Auffangbehälter (14) durchtreten zu lassen.

19. Ausrüstung nach einem der vorstehenden Ansprüche, wobei der Behälter (16) für die pulvrige oder gemahlene Zutat zumindest teilweise den Verbindungsweg begrenzt.

20. Ausrüstung nach einem der vorstehenden Ansprüche, wobei die Mittel zur Beschränkung des Druckabfalls ferner einen Boden (28) des Auffangbehälters (14) umfassen, welcher mit einer Vielzahl an Öffnungen (36) versehen ist, um die Flüssigkeit dort hindurchtreten zu lassen, die derart angeordnet und gestaltet sind, dass das Öffnungsverhältnis größer als 5% ist.

21. Ausrüstung nach Anspruch 20, wobei die Öffnungen (36) des Bodens (28) des Auffangbehälters (14) derart angeordnet und gestaltet sind, dass das Öffnungsverhältnis in etwa 25% entspricht.

22. Ausrüstung nach Anspruch 20 oder 21, wobei zumindest eine der Öffnungen (36) durch eine abgekantete Länge des Bodens (28) definiert ist, um die Durchtrittsoberfläche für die Flüssigkeit zu vergrößern.

23. Ausrüstung nach einem der vorstehenden Ansprüche, ferner umfassend ein Ventil (40), welches an dem Ende einer Zuführungsleitung (38) des Auffangbehälters (14) aufgenommen ist, wobei das Ventil (40) einen Stopfen umfasst, der geeignet ist, die Zuführungsleitung (38) zu verschließen, bis ein bestimmter Druck in dem Boiler (12) erreicht ist.

24. Behälter (16) für eine pulvrige oder gemahlene Zutat, welcher zur Aufnahme in einer Ausrüstung (10) zur Herstellung eines Heißgetränks nach einem der vorstehenden Ansprüche geeignet ist, der einen sich bewegenden Boden (30) entlang der Seitenwände (32) des Behälters (16) umfasst zwischen einer Ruhestellung, die einer nicht zusammengebauten Anordnung der Ausrüstung entspricht, und einer Arbeitsstellung, die einer zusammengebauten Anordnung der Ausrüstung entspricht, **dadurch gekennzeichnet, dass** er ferner Mittel zum Verschieben des Bodens (30) aus der Ruhestellung in die Arbeitsstellung in der zusammengebauten Anordnung der Ausrüstung aufweist.

25. Behälter nach Anspruch 24, umfassend Mittel zum Halten des Bodens (30) in der Ruhestellung.

26. Behälter nach Anspruch 25, wobei die Mittel zur Halterung des Bodens (30) in der Ruhestellung elastische Mittel umfassen, die zwischen den Boden (30) und Bodenwände des Behälters (16) eingebracht werden.

27. Behälter nach Anspruch 26, wobei die elastische Mittel eine Schraubenfeder (44) umfassen, die im Inneren an der Seite der Seitenwände (32) des Behälters (16) für die pulvrige oder gemahlene Zutat angeordnet ist.

28. Behälter nach einem der Ansprüche 24 bis 27, umfassend Mittel zum Festlegen der Ruhestellung des Bodens (30).

29. Behälter nach Anspruch 28, wobei die Mittel zum Festlegen der Ruhestellung zumindest einen Vorsprung der Seitenwände (32) umfassen, der sich ins Innere der Aufnahmekammer (26) für die pulvrige oder gemahlene Zutat hin erstreckt.

30. Behälter nach Anspruch 29, wobei der Vorsprung erhalten wird, indem dezentral die Seitenwände (32) des Behälters (16) für die pulvrige oder gemahlene Zutat abgekantet werden.

31. Behälter nach Anspruch 29 oder 30, wobei der Vorsprung eine ringförmige Abkantung (46) der Seitenwände (32) der Aufnahmekammer (26) ist.

32. Behälter nach Anspruch 24, wobei die Mittel zum Verschieben des Bodens (30) zumindest ein starres Element (48) mit einer Länge umfassen, die dem Abstand zwischen dem sich bewegenden Boden (30) in der Arbeitsstellung und dem Boden (28) des Auffangbehälters (14) entspricht, wobei die Länge größer als der Abstand zwischen dem sich bewegenden Boden (30) in der Ruhestellung und dem Boden (28) des Auffangbehälters (14) ist.

33. Behälter nach Anspruch 32, wobei das starre Element (48) einstückig mit dem sich bewegenden Boden (30) gefertigt ist und sich zu dem Boden (28) des Auffangbehälters (14) hin erstreckt.

34. Behälter nach Anspruch 33, wobei sich das starre Element (48) zentral zu dem sich bewegenden Boden (30) erstreckt.

35. Behälter nach Anspruch 33 oder 34, wobei sich das starre Element (48) von dem sich bewegenden Boden (30) erstreckt, um dadurch eine größere Höhe der Seitenwände (32) des Behälters (16) zu erlangen.

## Revendications

1. Equipement (10) pour la production d'une boisson chaude, comportant un générateur de vapeur (12), un récipient collecteur (14) associé au générateur de vapeur (12) et des moyens définissant un trajet de raccordement du générateur de vapeur (12) au récipient collecteur (14),
dans lequel lesdits moyens définissant un trajet de collecte du générateur de vapeur (12) au récipient collecteur (14) comportent des moyens destinés à limiter la chute de pression subie par un liquide contenu dans le générateur de vapeur (12) qui, lorsque le générateur de vapeur est chauffé, s'élève le long dudit trajet jusqu'au récipient collecteur (14), lequel équipement comporte en outre une chambre (26) de logement pour un ingrédient en poudre ou moulu, ladite chambre (26) de logement étant définie par un récipient (16) pour ledit ingrédient en poudre ou moulu, qui est introduit dans l'embouchure ouverte (15) du générateur de vapeur (12), et un fond (28) dudit récipient collecteur (14), **caractérisé en ce que** lesdits moyens destinés à limiter la chute de pression comprennent des moyens destinés à augmenter le volume de la chambre de logement (26) entre un volume au repos, correspond à une configuration non assemblée de l'équipement, et un volume de travail correspondant à une configuration assemblée de l'équipement.

2. Equipement selon la revendication 1, dans lequel le volume de travail de ladite chambre de logement (26) est supérieur d'environ 15 % au volume au repos de ladite chambre de logement (26).

3. Equipement selon la revendication 1 ou 2, dans lequel ledit récipient (16) pour ledit ingrédient en poudre ou moulu comporte un fond (30) se déplaçant le long de parois latérales (32) du récipient (16) entre une position de repos, correspondant à une configuration non assemblée de l'équipement, et une position de travail, correspondant à une configuration assemblée de l'équipement.

4. Equipement selon la revendication 3, dans lequel ledit fond (30) se déplace suivant une direction verticale.

5. Equipement selon la revendication 4, dans lequel ledit fond (30) se déplace entre ladite position de repos, dans laquelle ledit fond (30) est agencé à une certaine hauteur, et ladite position de travail, dans laquelle ledit fond (30) est agencé à une hauteur inférieure à celle de la position de repos.

6. Equipement selon l'une des revendications 4 à 6, dans lequel ledit récipient (16) pour ledit ingrédient en poudre ou moulu comporte des moyens destinés à maintenir ledit fond (30) dans la position de repos.

7. Equipement selon la revendication 6, dans lequel lesdits moyens destinés à maintenir ledit fond (30) dans la position de repos comprennent des moyens élastiques insérés entre ledit fond (30) et des parois de fond dudit récipient (16).

8. Equipement selon la revendication 7, dans lequel lesdits moyens élastiques comprennent un ressort hélicoïdal (44) placé intérieurement sur le côté des parois latérales (32) du récipient (16) pour ledit ingrédient en poudre ou moulu.

9. Equipement selon l'une des revendications 3 à 8, dans lequel ledit récipient (16) pour ledit ingrédient en poudre ou moulu comporte des moyens destinés à définir ladite position de repos dudit fond (30).

10. Equipement selon la revendication 9, dans lequel lesdits moyens destinés à définir ladite position de repos comprennent au moins une saillie desdites parois latérales (32) s'étendant vers l'intérieur de ladite chambre de logement (26) de l'ingrédient en poudre ou moulu.

11. Equipement selon la revendication 10, dans lequel ladite saillie est obtenue en pliant localement les parois latérales (32) du récipient (16) pour ledit ingrédient en poudre ou moulu.

12. Equipement selon la revendication 10 ou 11, dans lequel ladite saillie est un pliage annulaire (46) des parois latérales (32) de la chambre de logement (26).

13. Equipement selon l'une des revendications 3 à 12, comportant en outre des moyens destinés à déplacer ledit fond (30) du récipient (16) pour l'ingrédient en poudre ou moulu de la position de repos à la position de travail dans la configuration assemblée de l'équipement.

14. Equipement selon la revendication 13, dans lequel lesdits moyens destinés à déplacer ledit fond (30) comprennent au moins un élément rigide (48) interposé entre le fond mobile (30) du récipient (16) pour ledit ingrédient en poudre ou moulu et le fond (28) du récipient collecteur (14), ledit élément rigide (48) ayant une longueur égale à la distance entre le fond mobile (30), dans la position de travail, et le fond (28) du récipient collecteur (14), ladite longueur étant supérieure à la distance entre ledit fond mobile (30), dans la position de repos, et ledit fond (28) du récipient collecteur (14).

15. Equipement selon la revendication 14, dans lequel ledit élément rigide (48) est formé d'une seule pièce avec le fond mobile (30) et s'étend vers le fond (28) du récipient collecteur (14).

16. Equipement selon la revendication 15, dans lequel ledit élément rigide (48) s'étend centralement jusqu'au fond mobile (30).

17. Equipement selon la revendication 15 ou 16, dans lequel ledit élément rigide (48) s'étend depuis le fond mobile (30) sur une plus grande hauteur des parois latérales (32) du récipient (16).

18. Equipement selon l'une des revendications 3 à 17, dans lequel ledit fond mobile (30) présente de multiples petits trous (34) pour le passage du liquide du générateur de vapeur (12) au récipient collecteur (14).

19. Equipement selon l'une des revendications précédentes,
dans lequel ledit récipient (16) pour ledit ingrédient en poudre ou moulu définit au moins partiellement ledit trajet de raccordement.

20. Equipement selon l'une des revendications précédentes,
dans lequel lesdits moyens destinés à limiter la chute de pression comprennent en outre un fond (28) dudit récipient collecteur (14) pourvu de multiples ouvertures (36) pour le passage dudit liquide à travers elles, qui sont agencées et configurées de façon que le rapport vide/plein soit supérieur à 5 %.

21. Equipement selon la revendication 20, dans lequel les ouvertures (36) dudit fond (28) du récipient collecteur (14) sont agencées et configurées de façon que le rapport vide/plein soit égal à environ 25 %.

22. Equipement selon la revendication 20 ou 21, dans lequel au moins l'une desdites ouvertures (36) est définie par une longueur pliée dudit fond (28) afin d'augmenter la surface de passage pour ledit liquide.

23. Equipement selon l'une des revendications précédentes, comportant en outre une valve (40) logée à l'extrémité d'un conduit (38) de distribution dudit récipient collecteur (14), ladite valve (40) comportant un bouchon apte à fermer ledit conduit de distribution (38) jusqu'à ce qu'une certaine pression ait été atteinte à l'intérieur du générateur de vapeur (12).

24. Récipient (16) pour un ingrédient en poudre ou moulu apte à être logé dans un équipement (10) pour la production d'une boisson chaude selon l'une des revendications précédentes, comportant un fond (30) mobile le long de parois latérales (32) du récipient (16) entre une position de repos, correspondant à une configuration non assemblée de l'équipement, et une position de travail, correspondant à une configuration assemblée de l'équipement, **caractérisé en ce qu'**il comporte en outre des moyens destinés à déplacer ledit fond (30) de la position de repos à la position de travail dans la configuration assemblée de l'équipement.

25. Récipient selon la revendication 24, comportant des moyens destinés à maintenir ledit fond (30) dans la position de repos.

26. Récipient selon la revendication 25, dans lequel lesdits moyens destinés à maintenir ledit fond (30) dans la position de repos comprennent des moyens élastiques insérés entre ledit fond (30) et des parois de fond dudit récipient (16).

27. Récipient selon la revendication 26, dans lequel lesdits moyens élastiques comprennent un ressort hélicoïdal (44) placé intérieurement sur le côté des parois latérales (32) du récipient (16) pour ledit ingrédient en poudre ou moulu.

28. Récipient selon l'une des revendications 24 à 27, comportant des moyens destinés à définir ladite position de repos dudit fond (30).

29. Récipient selon la revendication 28, dans lequel lesdits moyens destinés à définir ladite position de repos comprennent au moins une saillie desdites parois latérales (32) s'étendant vers l'intérieur de ladite chambre de logement (26) de l'ingrédient en poudre ou moulu.

30. Récipient selon la revendication 29, dans lequel ladite saillie est obtenue en pliant localement les parois latérales (32) du récipient (16) pour ledit ingrédient en poudre ou moulu.

31. Récipient selon la revendication 29 ou 30, dans lequel ladite saillie est un pliage annulaire (46) des parois latérales (32) de la chambre de logement (26).

32. Récipient selon la revendication 24, dans lequel lesdits moyens destinés à déplacer ledit fond (30) comprennent au moins un élément rigide (48) ayant une longueur égale à la distance entre le fond mobile (30), dans la position de travail, et le fond (28) du récipient collecteur (14), ladite longueur étant supérieure à la distance entre ledit fond mobile (30), dans la position de repos, et ledit fond (28) du récipient collecteur (14).

33. Récipient selon la revendication 32, dans lequel ledit élément rigide (48) est réalisé d'une seule pièce avec le fond mobile (30) et s'étend vers le fond (28) du récipient collecteur (14).

34. Récipient selon la revendication 33, dans lequel ledit élément rigide (48) s'étend centralement jusqu'au fond mobile (30).

35. Récipient selon la revendication 33 ou 34, dans lequel ledit élément rigide (48) s'étend depuis le fond mobile (30) pour une plus grande hauteur des parois latérales (32) du récipient (16).
